# EUROPEAN PATENT SPECIFICATION

(11) **EP 3 635 225 B1**
(45) Date of publication and mention of the grant of the patent: **26.02.2025**
(21) Application number: 17912817.8
(22) Date of filing: 05.06.2017
(51) Int. Cl.: F01N 3/022, B01D 46/00, B01D 29/21, B01D 29/96, B01D 35/153

(54) **SPRING BIASED FILTER ELEMENT**
FEDERVORGESPANNTES FILTERELEMENT
ÉLÉMENT DE FILTRE SOLLICITÉ PAR RESSORT

(43) Date of publication of application: 15.04.2020
(73) Proprietor: Baldwin Filters, Inc., Cleveland, OH 44124 (US)
(72) Inventor: MERRITT, Steven, J., Kearney, NE 68845 (US); MOORE, Jonathan, D., Ellington, CT 06029 (US)
(74) Representative: Murgitroyd & Company
(86) International application number: PCT/US2017/035894
(87) International publication number: WO 2018/226201

(56) References cited:
- WO-A1-2007/148047
- DE-U1- 9 411 212
- GB-A- 2 295 331
- KR-B1- 101 107 442
- US-A1- 2006 096 934
- US-A1- 2009 114 588
- US-A1- 2009 184 045
- US-A1- 2010 140 151
- US-A1- 2012 031 822
- US-B1- 7 531 090

## Description

### FIELD OF THE INVENTION

The present disclosure relates to a filter element for use in a filter enclosure. Particularly, a filter element for filtering the coolant of an internal combustion engine.

### BACKGROUND

In an automobile, heat balance is integral to maintaining engine temperature. Flowing through a coolant circuit, coolant absorbs heat and subsequently expels the heat through the radiator of the automobile. In the process, the coolant encounters and accumulates rust, scale formation and various other particulates and debris. Therefore, the use of a coolant filter assembly is pivotal in removing contaminants to maintain a proper heat control system.

In a typical cooling system, a filter element is positioned within a housing of the coolant filter assembly. Hot coolant carrying contaminants enters the housing through an inlet. During operation, pressure is built up within the housing and throughout the coolant circuit. When removing and replacing a filter element, a service person usually must unscrew a cover to the housing in order to extract the used filter. If proper safeguards are not in place, hot coolant can spurt out and injure the service person removing the filter.

To ensure safety, the inlet allowing hot, unfiltered coolant into the housing must be closed prior to the cover being fully removed from the housing. Prior art filter assemblies can be costly, require more parts and necessitate training to change the filter element, as these assemblies are only offered and function in combination and not independent of each other. Therefore, there is a need in the art for a replaceable filter element that can be used in the housing of a filter assembly, without replacing the entire filter assembly.

An example of a full-flow filter assembly is described in GB 2295331, wherein blockage of a small pore size screen displaces a spring loaded valve member to allow by-pass flow. US 7531090 B1 discloses a filter element removably positionable within a filter housing that includes a standpipe extending therewithin and provided with a flow control valve.

### SUMMARY

In the present disclosure a filter element for use in a housing of a filter assembly having a cover and a seal therebetween is provided, as defined in appended claim 1. The disclosed filter element ensures safety during removal of the filter element from the filter assembly by incorporating components that enable the filter element to shut off the flow of fluid entering the housing of the filter assembly before the seal between the cover and the housing is no longer effective.

The housing defines an inlet having an inlet valve and an outlet having an outlet valve. The filter element comprises a first (upper) endcap including a handle and a second (lower) endcap including an inlet valve actuator. The inlet valve actuator is a ring protruding from the second endcap. A cylindrical ring of filter media circumscribes a longitudinal axis and extends axially between the first and second endcaps. The filter media surrounds a coaxial center tube that defines an outlet of the filter element. The outlet of the filter element includes an outlet valve actuator. A sleeve concentric and contiguous with the center tube defines a cavity and surrounds a bias member. The sleeve is positioned to receive and exert force in first direction and second directions to allow for compression and extension of the bias member.

When the filter element is positioned within the housing, threading the cover to the housing exerts force on the first endcap and compresses the bias member. The inlet and outlet valve actuators are positioned such that compression of the bias member causes the inlet and outlet valve actuators to actuate the inlet and outlet valves, allowing fluid to flow in and out of the housing. Removing the cover from the housing relieves the force exerted on the first endcap and causes the bias member to extend. Extension of the bias member causes the inlet and outlet valve actuators to retreat from the inlet and outlet valves. The seal is positioned a distance from a first (upper) end of the housing that is greater than the distance the inlet and outlet valve actuators must retreat to cause the inlet and outlet valves to close and shut off the flow of fluid entering and leaving the housing. In this manner, the inlet and outlet valves are closed before the seal between the cover and the housing is opened and fluid is not able to spurt out during removal of the filter element.

### BRIEF DESCRIPTION OF THE DRAWINGS

Figure 1 is a front cross-sectional view of one disclosed embodiment of a filter element according to aspects of the disclosure;
Figure 2 is a bottom perspective view of the disclosed embodiment of Figure 1;
Figure 3 is an enlarged cross-sectional view of the disclosed embodiment of Figure 1 with particular emphasis on a bias member support assembly, a conduit and a second endcap;
Figure 4 is a cross-sectional view of the disclosed embodiment of Figure 1 depicting the flow path of a fluid;
Figure 5 is a cross-sectional view of the disclosed embodiment of Figure 1 depicting an alternative bias member;
Figure 6 is a front cross-sectional view of a second disclosed embodiment of the filter element according to aspects of the disclosure;
Figure 7 is an enlarged cross-sectional view of the disclosed embodiment of Figure 6 with particular emphasis on a bias member, a second endcap and an annular recess.

### DETAILED DESCRIPTION

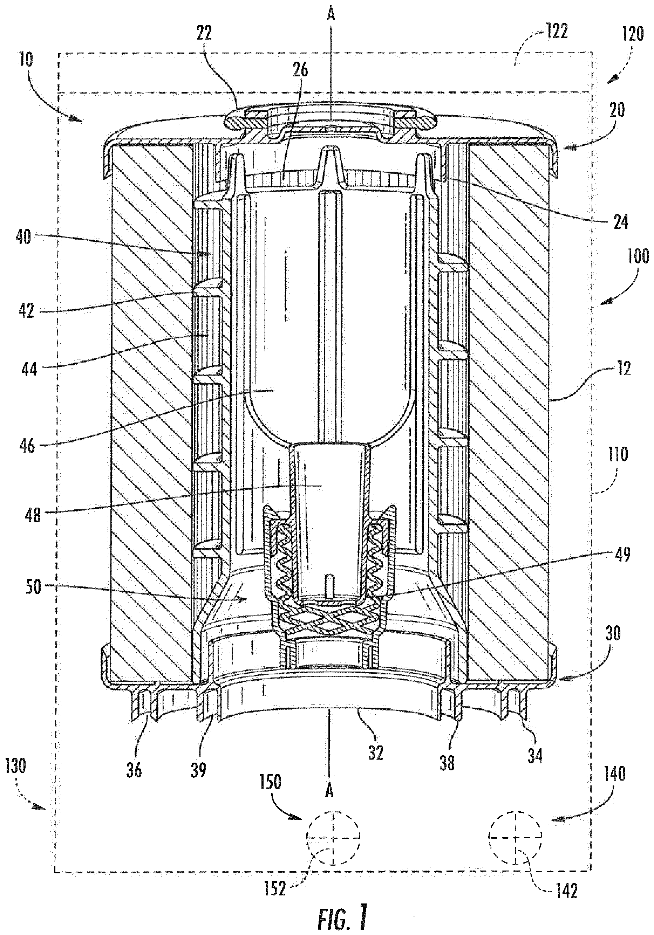

An embodiment of a filter element according to aspects of the disclosure will now be described with reference to Figures 1-5, wherein like numerals represent like parts. The disclosed embodiment of a filter element will generally be referred to by the reference numeral 10. The filter element 10 is contemplated for use within a housing 100 of a coolant filter assembly. Various materials, methods of construction and methods of fastening will be discussed in the context of the disclosed embodiment. Those skilled in the art will recognize known substitutes for the materials, construction methods, and fastening methods, all of which are contemplated as compatible with the disclosed embodiment and are intended to be encompassed by the appended claims.

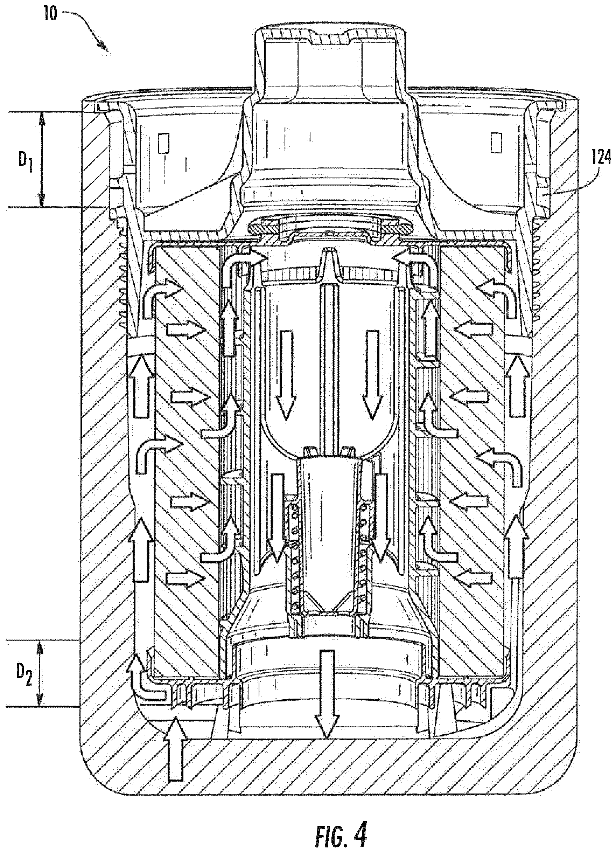

A typical filter assembly includes a housing 100 having a generally cylindrical sidewall 110 extending between a first (upper) end 120 and a second end (lower) 130. A removable cover 122 having a seal 124 (Figure 4) can be fastened to and removed from the first end 120. When fastened, the seal 124 is positioned a distance D₁ from an upper edge of the housing 100 such that when the cover 122 is partially removed, the seal 124 is still effective in sealing the housing 100. In the disclosed embodiment, it is contemplated that the cover 122 and the housing 100 are threaded such that the cover 122 is screwed on and off. The second end 130 of the housing defines an inlet 140 having an inlet valve 142 and an outlet 150 having an outlet valve 152. The outlet 150 returns filtered fluid to a fluid circuit. The filter element 10 is inserted into the housing 100 and the cover 122 is screwed onto the first end 120. In this arrangement, the inlet valve 142 is open and dirty fluid flows through the inlet 140.

As shown in Figure 1, the filter element 10 has a longitudinal axis A-A and includes a cylindrical ring of filter media 12, a first (upper) endcap 20, a second (lower) endcap 30, a center tube 40, a movable support assembly 50 and an inlet valve actuator ring 34. The filter media 12 is coaxial to the longitudinal axis A-A and extends between the first and second endcaps 20, 30. The filter media 12 circumscribes the center tube 40, which also extends between the first and second endcaps 20, 30. In the disclosed embodiment, the filter media 12 is chosen from a suitably permeable, fibrous material and attached in a fluid tight relationship to the first and second endcaps 20, 30.

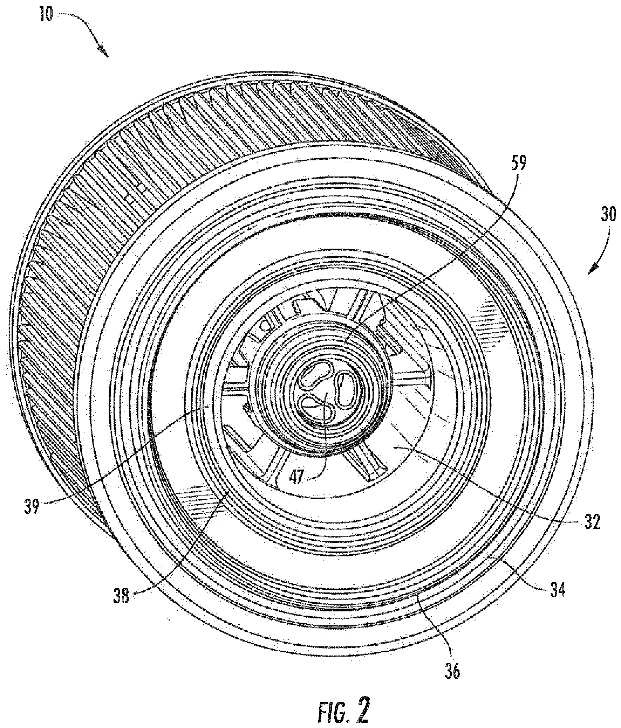

As shown in Figures 1 and 2, the second endcap 30 defines a fluid flow opening 32 coaxial with the longitudinal axis A-A. The inlet valve actuator 34 is present on the second endcap 30 and is concentric with the fluid flow opening 32. The inlet valve actuator 34 protrudes from the second endcap 30 and defines a groove 36. The inlet valve actuator 34 is configured to open the inlet valve 142 in the inlet 140. A filter element positioning ring 38 defining a groove 39 is intermediate and concentric with the fluid flow opening 32 and the inlet valve actuator 34. The positioning ring 38 centers the filter element 10 in the second end 130 of the housing 100. In this orientation, the inlet valve actuator 34 is capable of engaging and opening the inlet valve 142. As shown in Figure 4, when the inlet valve 142 is open, dirty fluid flows through the inlet 140 and is circulated radially about the filter element 10 and passes through the filter media 12.

The first endcap 20 has a top and bottom surface. The top surface includes a handle 22 or other compatible means to grip the filter element 10 for removal from the housing 100. The bottom surface includes an annulus 24 extending toward and connecting to the center tube 40. A plurality of fluid flow apertures 26 are longitudinally intermediate the annulus 24 and the center tube 40. The apertures 26 are configured to allow fluid that has passed through the filter media 12 to flow into the center tube 40.

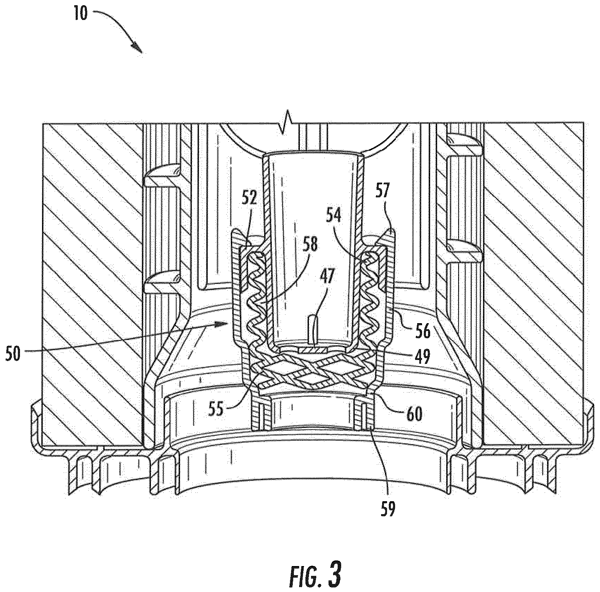

As shown in Figures 1 and 3, the center tube 40 includes an interior and an exterior. On the exterior, a plurality of annular flanges 42 protrudes radially from the center tube 40. The flanges 42 establish an annular space 44 between the center tube 40 and the filter media 12 while also supporting the filter media 12. Clean fluid fills the space 44 before flowing through the apertures 26 into the center tube 40. On the interior, the center tube 40 defines a cylindrical cup-shaped reservoir 46. The reservoir 46 is arranged to receive fluid that passes through the apertures 26. The reservoir 46 communicates with a narrow annular conduit 48. The conduit 48 leads to a fluid return opening 49 of the center tube 40. An outlet valve actuator 47 is positioned coaxially within the return opening 49. As shown in Figure 4, when the outlet valve actuator 47 engages the outlet valve 152 in the outlet 150 of the housing 100, clean fluid collected in the reservoir 46 leaves the filter element 10 through the return opening 49 and passes through outlet 150 in the housing 100 to return to the fluid circuit.

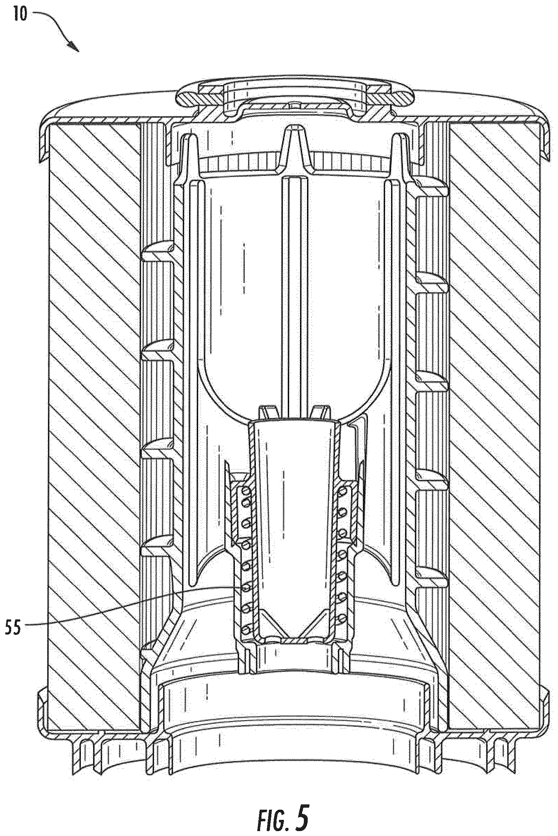

The support assembly 50 includes an annular shoulder 52 projecting radially from the conduit 48 of the center tube 40. The shoulder defines an annular slot 54. A coaxial sleeve 56 is contiguous with the shoulder 52 and defines an annular cavity 58. The shoulder 52 is oriented within the cavity 58 of the sleeve 56. The sleeve 56 includes a ramped stop 57 at a position above the shoulder 52, a base 60 and a guide ring 59 extending from the base 60. Within the annular cavity 58, a bias member 55 is captured between the annular slot 54 and the sleeve 56. The bias member 55 is captured in the annular slot 54 of the shoulder 52 at one end and at the base 60 of the sleeve 56 at another end. In the disclosed embodiment, the bias member 55 is a wave spring, but other compatible biasing mechanisms such as a coil spring (Figure 5) may be used. The sleeve 56 is positioned to receive and exert force axially in a first direction toward the first endcap 20 and receive and exert force axially in a second direction toward the second endcap 30. Force applied to the sleeve 56 in the first direction causes the bias member 55 to compress. When the cover 122 is fastened to the housing 100, the bias member 55 is in a compressed position. Extension of the bias member 55 applies force on the sleeve 56 and causes the sleeve 56 to exert force in the second direction. During and after removal of the cover 122 from the housing 100, the bias member 55 is in an extended position.

Fastening the cover 122 to the housing 100 exerts a force on the first endcap 20 of the filter element 10 and pushes the filter element 10 axially toward the second end 130 of the housing 100. The exertion of force on the first endcap 20 causes the sleeve 56 to push against the second end 130 of the housing 100 and receive and exert force in the first direction causing compression of the bias member 55. When the bias member 55 is in the compressed position, the inlet valve actuator 34 applies sufficient force on the inlet valve 142 to open the inlet 140 and allow dirty fluid to flow into the housing 100. In the compressed position of the bias member 55, the return opening 49 also engages the outlet 150 and the outlet valve actuator 47 to open the outlet valve 152 and allow clean fluid to leave the housing 100.

Removal of the cover 122 from the housing 100 relieves force on the first endcap 20 of the filter element 10 causing the compressed bias member 55 to extend. The extension of the bias member 55 urges the sleeve 56 to push in the second direction. The sleeve 56 pushes off the second end 130 of the housing 100 and propels the filter element 10 axially in the first direction toward the first end 120 of the housing 100. In the extended position of the bias member 55, the inlet and outlet valve actuators 34, 47 disengage the inlet and outlet valves 142, 152, closing off the inlet 140 and the outlet 150 from fluid flow. As shown in Figure 4, to close the inlet and outlet valves 142, 152, the inlet and outlet valve actuators 34, 47 must retreat in the first direction a distance D₂ that is less than the distance D₁. During removal of the cover 122, the seal 124 travels toward the upper edge of the housing 100 simultaneously with the inlet and outlet valve actuators 34, 47 retreating from the inlet and outlet valves 142, 152. The inlet and outlet valve actuators 34, 47 retreat sufficiently to close the inlet and outlet valves 142, 152 when the cover 122 is partially removed and the seal 124 has not yet reached the upper edge of the housing 100. Further, the inlet and outlet valves 142, 152 are closed before the seal 124 between the cover 122 and the housing 100 is broken and no longer effective.

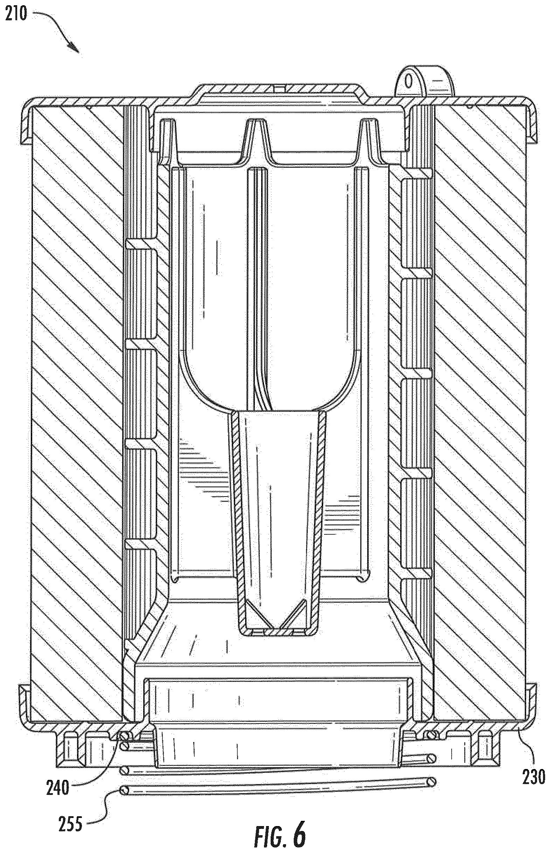

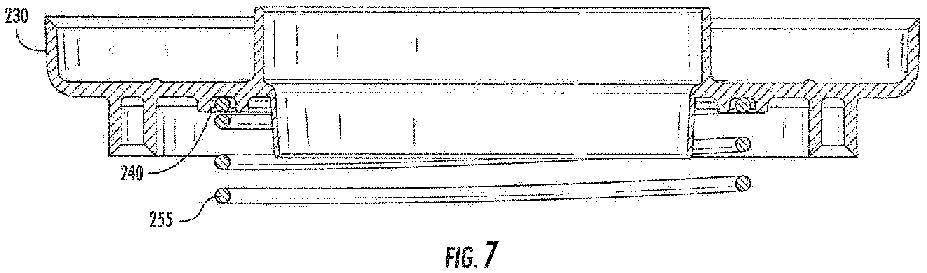

Figures 6 and 7 illustrate a second embodiment of a filter element 210, which is similar in structure and function to the filter element 10. The filter element 210 includes a bias member 255 captured in an annular recess 240 extending from a second (lower) endcap 230. The bias member 255 may be a coil spring. The bias member 255 extends toward the second end 130 of the housing 100.

The use of the terms "a" and "an" and "the" and similar referents in the context of describing the disclosed embodiment (especially in the context of the following claims) is to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. All methods described herein can be performed in any suitable order unless otherwise indicated herein or otherwise clearly contradicted by context. The use of any and all examples, or exemplary language (e.g., "such as") provided herein, is intended merely to better illuminate the disclosed embodiments and does not pose a limitation on the scope of the claims unless otherwise claimed.

## Claims

1. A filter element (10) for use in a housing (100) of a filter assembly, wherein said housing (100) has a first upper end (120) with a removable cover (122) and a second lower end (130), wherein said second lower end defines an inlet (140) having an inlet valve (142) and an outlet (150) having an outlet valve (152), the filter element (10) comprising:
a cylindrical ring of filter media (12) circumscribing a longitudinal axis and extending axially between a first upper endcap (20) and a second lower endcap (30) having an inlet valve actuator (34);
**characterized in that** the filter element further comprises:
a coaxial center tube (40) circumscribed by the filter media (12) and having a first end facing the first upper end cap (20), wherein the interior of the center tube (40) defines a cylindrical cup-shaped reservoir (46);
a plurality of fluid flow apertures (26) which are longitudinally intermediate the first upper end cap (20) and the center tube (40), wherein the apertures (26) are configured to allow fluid that has passed through the filter media (12) to flow into the center tube (40), wherein the cylindrical cup-shaped reservoir (46) is arranged to receive fluid passing through apertures (26), wherein the reservoir (46) communicates fluidly with a narrow conduit (48) leading to a fluid return opening (49), wherein an outlet valve actuator (47) is positioned coaxially within the return opening (49);
a sleeve (56) coaxial with the conduit (48) defining, with the conduit (48), an annular cavity (58) and surrounding a bias member (55) captured between the sleeve (56) and the conduit (48), wherein the sleeve (56) is positioned to receive and exert force axially in a first direction towards the first upper end cap (20) and in a second direction towards the second lower end cap (30),
wherein, the sleeve (56) is movable between a retracted position and an extended position relative to the outlet valve actuator (47) and is arranged such that the sleeve (56) is moveable in the first direction to the retracted position in response to an application of axial force on the sleeve (56) to compress the bias member (55) and such that removal of the axial force from the sleeve (56) causes the bias member (55) to extend and urge the sleeve (56) in the second direction to the extended position;
wherein the fastening of the removable cover (122) to the housing (100) exerts a force on the first upper end cap (20) of the filter element and pushes the sleeve (56) against the second lower end (130) of the housing, thereby moving the sleeve (56) in the first direction to the retracted position.

2. The filter element (10) of claim 1, wherein the conduit (48) includes a radially projecting annular shoulder (52) defining an annular slot (54), the annular shoulder (52) positioned within the sleeve (56) and the annular slot (54) capturing a first end of the bias member (55).

3. The filter element (10) of claim 1, wherein the conduit (48) includes a radially projecting annular shoulder (52) positioned within the sleeve (56) and defining an annular slot (54), the bias member (55) captured between the annular slot (54) at one end and the sleeve (56) at a another end, the bias member (55) compressing when force is exerted on the sleeve (56) and extending when force is removed from the sleeve (56).

4. The filter element (10) of claim 1, wherein the sleeve (56) includes a ramped stop (57) abutted by an annular shoulder (52) projecting radially from the conduit (48) when the bias member (55) is in an extended position.

5. The filter element (10) of claim 1, wherein the inlet valve actuator (34) is a ring protruding coaxially from the second endcap (30).

6. The filter element (10) of claim 1, wherein the bias member (55) is a wave spring or a coil spring.

7. A filter assembly comprising:
a housing (100) having a first end (120) and a second end (130), the housing second end (130) including an inlet (140) having an inlet valve (142) and an outlet (150) having an outlet valve (152);
a cover (122) threaded to the first end (120) of the housing and including a seal (124); and
a filter element (10) according to claim 1 positioned within the housing (100) with said first end cap (20) facing said cover (122) and said second end cap (30) facing said housing second end (130);
and in which, the housing, cover and filter element are arranged such that fastening the cover (122) to the housing (100) exerts a force on the first endcap (20) and pushes the filter element (10) toward the second end (130) of the housing (100), causing the sleeve (56) to push against the second end (130) of the housing (100) and move in the first direction, the filter element (10) moves toward the second end (130) of the housing and the inlet valve actuator (34) causes the inlet valve (142) to open, the outlet valve actuator (47) causes the outlet valve (152) to open and removing the cover (122) from the housing (100) relieves force on the first endcap (20) allowing the compressed bias member (55) to extend and the sleeve (56) to move in the second direction, whereby the filter element (10) moves away from the second end (130) of the housing and causes the inlet valve (142) and the outlet valve (152) to close.

8. The filter assembly of claim 7, wherein rotating the cover (122) in a first direction to tighten the cover (122) to the housing (100) exerts a force on the first endcap (20) and rotating the cover (122) in a second direction removes the cover (120) and relieves the force exerted on the first endcap (20).

9. The filter assembly of claim 7, wherein the seal (124) is positioned a distance D1 from an upper edge of the housing (100) that is greater than a distance D2 than the inlet valve actuator (34) retreats to cause the inlet valve (142) to close.

10. The filter assembly of claim 7, wherein during removal of the cover (122) from the housing (100), the inlet and outlet valves (142, 152) are closed before the seal (124) between the housing (100) and the cover (122) is no longer effective.

11. A method of removing a filter element (10) according to claim 1 for use in a housing (100) of a filter assembly according to claim 7.

## Patentansprüche

1. Ein Filterelement (10) zur Verwendung in einem Gehäuse (100) einer Filteranordnung, wobei das Gehäuse (100) ein erstes, oberes Ende (120) mit einer entfernbaren Abdeckung (122) und ein zweites, unteres Ende (130) aufweist, wobei das zweite, untere Ende einen Einlass (140), der ein Einlassventil (142) aufweist, und einen Auslass (150), der ein Auslassventil (152) aufweist, definiert, wobei das Filterelement (10) Folgendes beinhaltet:
einen zylindrischen Filtermediumring (12), der eine Längsachse umschreibt und sich zwischen einer ersten, oberen Endkappe (20) und einer zweiten, unteren Endkappe (30), die einen Einlassventilaktor (34) aufweist, erstreckt;
**dadurch gekennzeichnet, dass** das Filterelement ferner Folgendes beinhaltet:
ein koaxiales mittiges Rohr (40), das von dem Filtermedium (12) umschrieben wird und ein erstes Ende aufweist, das zu der ersten, oberen Endkappe (20) weist, wobei das Innere des mittigen Rohrs (40) einen zylindrischen becherförmigen Behälter (46) definiert;
einen Vielzahl von Fluidflussöffnungen (26), die in Längsrichtung zwischen der ersten, oberen Endikappe (20) und dem mittigen Rohr (40) liegen, wobei die Öffnungen (26) konfiguriert sind, um Fluid, das durch das Filtermedium (12) gelaufen ist, zu gestatten, in das mittige Rohr (40) zu fließen, wobei der zylindrische becherförmige Behälter (46) angeordnet ist, um Fluid aufzunehmen, das durch Öffnungen (26) läuft, wobei der Behälter (46) mit einem engen Kanal (48) fluidisch kommuniziert, der zu einer Fluidrückführungsöffnung (49) führt, wobei ein Auslassventilaktor (47) innerhalb der Rückführungsöffnung (49) koaxial positioniert ist;
eine zu dem Kanal (48) koaxiale Hülse (56), die mit dem Kanal (48) einen ringförmigen Hohlraum (58) definiert und ein Vorspannelement (55) umgibt, das zwischen der Hülse (56) und dem Kanal (48) eingeschlossen ist, wobei die Hülse (56) positioniert ist, um axial in einer ersten Richtung hin zu der ersten, oberen Endkappe (20) und in einer zweiten Richtung hin zu der zweiten, unteren Endkappe (30) Kraft aufzunehmen und auszuüben,
wobei die Hülse (56) relativ zu dem Auslassventilaktor (47) zwischen einer zurückgezogenen Stellung und einer ausgefahrenen Stellung bewegbar ist und so angeordnet ist, dass die Hülse (56) als Reaktion auf ein Aufbringen von Axialkraft auf die Hülse (56), um das Vorspannelement (55) zusammenzudrücken, in der ersten Richtung in die zurückgezogene Stellung bewegbar ist und dass die Entfernung der Axialkraft von der Hülse (56) bewirkt, dass das Vorspannelement (55) ausfährt und die Hülse (56) in der zweiten Richtung in die ausgefahrene Stellung presst;
wobei das Befestigen der entfernbaren Abdeckung (122) an dem Gehäuse (100) eine Kraft auf die erste, obere Endkappe (20) des Filterelements ausübt und die Hülse (56) gegen das zweite, untere Ende (130) des Gehäuses drückt, wodurch die Hülse (56) in der ersten Richtung in die zurückgezogene Stellung bewegt wird.

2. Filterelement (10) gemäß Anspruch 1, wobei der Kanal (48) einen radial vorspringenden ringförmigen Bund (52) umfasst, der eine ringförmige Nut (54) definiert, wobei der ringförmige Bund (52) innerhalb der Hülse (56) positioniert ist und die ringförmige Nut (54) ein erstes Ende des Vorspannelements (55) einschließt.

3. Filterelement (10) gemäß Anspruch 1, wobei der Kanal (48) einen radial vorspringenden ringförmigen Bund (52) umfasst, der innerhalb der Hülse (56) positioniert ist und eine ringförmige Nut (54) definiert, wobei das Vorspannelement (55) zwischen der ringförmigen Nut (54) an einem Ende und der Hülse (56) an einem anderen Ende eingeschlossen ist, wobei das Vorspannelement (55) zusammengedrückt wird, wenn Kraft auf die Hülse (56) ausgeübt wird, und ausfährt, wenn Kraft von der Hülse (56) entfernt wird.

4. Filterelement (10) gemäß Anspruch 1, wobei die Hülse (56) einen Anschlag (57) mit Schräge umfasst, der an einem ringförmigen Bund (52), der von dem Kanal (48) radial vorspringt, anliegt, wenn das Vorspannelement (55) in einer ausgefahrenen Stellung ist.

5. Filterelement (10) gemäß Anspruch 1, wobei der Einlassventilaktor (34) ein Ring ist, der von der zweiten Endkappe (30) koaxial vorspringt.

6. Filterelement (10) gemäß Anspruch 1, wobei das Vorspannelement (55) eine Wellenfeder oder eine Schraubenfeder ist.

7. Eine Filteranordnung, die Folgendes beinhaltet:
ein Gehäuse (100), das ein erstes Ende (120) und ein zweites Ende (130) aufweist, wobei das zweite Ende (130) des Gehäuses einen Einlass (140), der ein Einlassventil (142) aufweist, und einen Auslass (150), der ein Auslassventil (152) aufweist, umfasst;
eine Abdeckung (122), die an das erste Ende (120) des Gehäuses geschraubt ist und eine Dichtung (124) umfasst; und
ein Filterelement (10) gemäß Anspruch 1, das innerhalb des Gehäuses (100) positioniert ist, wobei die erste Endkappe (20) zu der Abdeckung (122) weist und die zweite Endkappe (30) zu dem zweiten Ende (130) des Gehäuses weist;
und wobei das Gehäuse, die Abdeckung und das Filterelement so angeordnet sind, dass das Befestigen der Abdeckung (122) an dem Gehäuse (100) eine Kraft auf die erste Endkappe (20) ausübt und das Filterelement (10) hin zu dem zweiten Ende (130) des Gehäuses (100) drückt, was bewirkt, dass die Hülse (56) gegen das zweite Ende (130) des Gehäuses (100) drückt und sich in die erste Richtung bewegt, wobei das Filterelement (10) sich hin zu dem zweiten Ende (130) des Gehäuses bewegt und der Einlassventilaktor (34) bewirkt, dass sich das Einlassventil (142) öffnet, wobei der Auslassventilaktor (47) bewirkt, dass sich das Auslassventil (152) öffnet, und das Entfernen der Abdeckung (122) von dem Gehäuse (100) Kraft auf die erste Endkappe (20) verringert, was dem zusammengedrückten Vorspannelement (55) gestattet, auszufahren, und der Hülse (56) gestattet, sich in die zweite Richtung zu bewegen, wodurch sich das Filterelement (10) von dem zweiten Ende (130) des Gehäusse weg bewegt und bewirkt, dass sich das Einlassventil (142) und das Auslassventil (152) schließen.

8. Filteranordnung gemäß Anspruch 7, wobei ein Drehen der Abdeckung (122) in eine erste Richtung, um die Abdeckung (122) an dem Gehäuse (100) festzuschrauben, eine Kraft auf die erste Endkappe (20) ausübt und ein Drehen der Abdeckung (122) in eine zweite Richtung die Abdeckung (120) entfernt und die Kraft verringert, die auf die erste Endkappe (20) ausgeübt wird.

9. Filteranordnung gemäß Anspruch 7, wobei die Dichtung (124) in einem Abstand D1 von einem oberen Rand des Gehäuses (100) positioniert ist, der größer als ein Abstand D2 ist, um den sich der Einlassventilaktor (34) zurückzieht, um zu bewirken, dass sich das Einlassventil (142) schließt.

10. Filteranordnung gemäß Anspruch 7, wobei während das Entfernens der Abdeckung (122) von dem Gehäuse (100) das Einlass- und das Auslassventil (142, 152) geschlossen sind, bevor die Dichtung (124) zwischen dem Gehäuse (100) und der Abdeckung (122) nicht mehr wirksam ist.

11. Ein Verfahren zum Entfernen eines Filterelements (10) gemäß Anspruch 1 zur Verwendung in einem Gehäuse (100) einer Filteranordnung gemäß Anspruch 7.

## Revendications

1. Un élément filtrant (10) pour une utilisation dans un logement (100) d'un ensemble filtrant, où ledit logement (100) présente une première extrémité supérieure (120) avec un couvercle amovible (122) et une deuxième extrémité inférieure (130), où ladite deuxième extrémité inférieure définit une admission (140) ayant une soupape d'admission (142) et une évacuation (150) ayant une soupape d'évacuation (152), l'élément filtrant (10) comprenant :
un anneau cylindrique de média filtrant (12) circonscrivant un axe longitudinal et s'étendant axialement entre un premier embout supérieur (20) et un deuxième embout inférieur (30) ayant un actionneur (34) de soupape d'admission ;
**caractérisé en ce que** l'élément filtrant comprend en outre :
un tube central coaxial (40) circonscrit par le média filtrant (12) et ayant une première extrémité tournée vers le premier embout supérieur (20), où l'intérieur du tube central (40) définit un réservoir cylindrique conformé comme un gobelet (46) ;
une pluralité d'ouvertures d'écoulement de fluide (26) qui sont longitudinalement intermédiaires entre le premier embout supérieur (20) et le tube central (40), où les ouvertures (26) sont configurées pour permettre à du fluide qui est passé au travers du média filtrant (12) de s'écouler dans le tube central (40), où le réservoir cylindrique conformé comme un gobelet (46) est agencé pour recevoir du fluide passant au travers d'ouvertures (26), où le réservoir (46) communique fluidiquement avec un conduit étroit (48) menant à un orifice de retour de fluide (49), où un actionneur de soupape d'évacuation (47) est positionné coaxialement au sein de l'orifice de retour (49) ;
un manchon (56) coaxial au conduit (48) définissant, avec le conduit (48), une cavité annulaire (58) et entourant un élément de sollicitation (55) capturé entre le manchon (56) et le conduit (48), où le manchon (56) est positionné pour recevoir et exercer une force axialement dans une première direction vers le premier embout supérieur (20) et dans une deuxième direction vers le deuxième embout inférieur (30),
où le manchon (56) peut se déplacer entre une position rétractée et une position étendue par rapport à l'actionneur de soupape d'évacuation (47) et est agencé de telle sorte que le manchon (56) peut se déplacer dans la première direction jusqu'à la position rétractée en réponse à une application d'une force axiale sur le manchon (56) pour comprimer l'élément de sollicitation (55) et de telle sorte que le retrait de la force axiale du manchon (56) amène l'élément de sollicitation (55) à s'étendre et à forcer le manchon (56) dans la deuxième direction jusqu'à la position étendue ;
où l'assujettissement du couvercle amovible (122) sur le logement (100) exerce une force sur le premier embout supérieur (20) de l'élément filtrant et pousse le manchon (56) contre la deuxième extrémité inférieure (130) du logement, déplaçant de ce fait le manchon (56) dans la première direction jusqu'à la position rétractée.

2. L'élément filtrant (10) de la revendication 1, où le conduit (48) inclut un épaulement annulaire (52) faisant radialement saillie définissant une fente annulaire (54), l'épaulement annulaire (52) étant positionné au sein du manchon (56) et la fente annulaire (54) capturant une première extrémité de l'élément de sollicitation (55).

3. L'élément filtrant (10) de la revendication 1, où le conduit (48) inclut un épaulement annulaire (52) faisant radialement saillie positionné au sein du manchon (56) et définissant une fente annulaire (54), l'élément de sollicitation (55) étant capturé entre la fente annulaire (54) à une extrémité et le manchon (56) à une autre extrémité, l'élément de sollicitation (55) se comprimant lorsqu'une force est exercée sur le manchon (56) et s'étendant lorsqu'une force est retirée du manchon (56).

4. L'élément filtrant (10) de la revendication 1, où le manchon (56) inclut une butée en rampe (57) aboutée par un épaulement annulaire (52) faisant radialement saillie depuis le conduit (48) lorsque l'élément de sollicitation (55) se trouve dans une position étendue.

5. L'élément filtrant (10) de la revendication 1, où l'actionneur de soupape d'admission (34) est un anneau faisant coaxialement saillie depuis le deuxième embout (30).

6. L'élément filtrant (10) de la revendication 1, où l'élément de sollicitation (55) est un ressort ondulé ou un ressort hélicoïdal.

7. Un ensemble filtrant comprenant :
un logement (100) ayant une première extrémité (120) et une deuxième extrémité (130), la deuxième extrémité de logement (130) incluant une admission (140) ayant une soupape d'admission (142) et une évacuation (150) ayant une soupape d'évacuation (152) ;
un couvercle (122) vissé sur la première extrémité (120) du logement et incluant un joint d'étanchéité (124) ; et
un élément filtrant (10) selon la revendication 1 positionné au sein du logement (100), ledit premier embout (20) étant tourné vers ledit couvercle (122) et ledit deuxième embout (30) étant tourné vers ladite deuxième extrémité de logement (130) ;
et dans lequel le logement, le couvercle et l'élément filtrant sont agencés de telle sorte que l'assujettissement du couvercle (122) sur le logement (100) exerce une force sur le premier embout (20) et pousse l'élément filtrant (10) vers la deuxième extrémité (130) du logement (100), amenant le manchon (56) à pousser contre la deuxième extrémité (130) du logement (100) et à se déplacer dans la première direction, l'élément filtrant (10) se déplace vers la deuxième extrémité (130) du logement et l'actionneur de soupape d'admission (34) amène la soupape d'admission (142) à s'ouvrir, l'actionneur de soupape d'évacuation (47) amène la soupape d'évacuation (152) à s'ouvrir et le retrait du couvercle (122) du logement (100) relâche la force sur le premier embout (20) permettant à l'élément de sollicitation (55) comprimé de s'étendre et au manchon (56) de se déplacer dans la deuxième direction, moyennant quoi l'élément filtrant (10) s'éloigne par déplacement de la deuxième extrémité (130) du logement et amène la soupape d'admission (142) et la soupape d'évacuation (152) à se fermer.

8. L'ensemble filtrant de la revendication 7, où la rotation du couvercle (122) dans une première direction afin de resserrer le couvercle (122) sur le logement (100) exerce une force sur le premier embout (20) et la rotation du couvercle (122) dans une deuxième direction retire le couvercle (120) et relâche la force exercée sur le premier embout (20).

9. L'ensemble filtrant de la revendication 7, où le joint d'étanchéité (124) est positionné à une distance D1 d'un bord supérieur du logement (100) qui est plus grande qu'une distance D2 de laquelle l'actionneur de soupape d'admission (34) se retire pour amener la soupape d'admission (142) à se fermer.

10. L'ensemble filtrant de la revendication 7, où, au cours du retrait du couvercle (122) du logement (100), les soupapes d'admission et d'évacuation (142, 152) sont fermées avant que le joint d'étanchéité (124) entre le logement (100) et le couvercle (122) ne soit plus efficace.

11. Un procédé de retrait d'un élément filtrant (10) selon la revendication 1 pour une utilisation dans un logement (100) d'un ensemble filtrant selon la revendication 7.
